# EUROPEAN PATENT SPECIFICATION

(11) **EP 0 344 310 B1**
(45) Date of publication and mention of the grant of the patent: **09.03.1994**
(21) Application number: 88900107.9
(22) Date of filing: 15.12.1987
(51) Int. Cl.: B23K 35/30, B23K 26/00, C22C 9/06, C23C 26/00

(54) **LASER PADDING MATERIAL AND METHOD FOR LASER PADDING USING SAME**
LASER-AUFSCHWEISSMATERIAL UND DESSEN VERWENDUNG ZUM LASER-AUFSCHWEISSEN
MATIERE DE PADDING POUR LASER ET PROCEDE D'UTILISATION DANS UN LASER

(30) Priority: 15.12.1986 JP 296663/86
(43) Date of publication of application: 06.12.1989
(73) Proprietor: KABUSHIKI KAISHA KOMATSU SEISAKUSHO, Minato-ku Tokyo 107 (JP)
(72) Inventor: TAKEDA, Toshihide, Hirakata-shi, Osaka 573 (JP); OKAMURA, Kazuo, Hirakata-shi, Osaka 573 (JP)
(74) Representative: Selting, Günther, Dipl.-Ing.
(86) International application number: JP8700981
(87) International publication number: WO8804593

(56) References cited:
- GB-A- 535 673
- GB-A- 1 206 380
- JP-A- 5 791 893
- JP-A- 5 914 748
- JP-A- 6 077 949
- JP-A- 6 191 323
- JP-A-59 145 748
- JP-B- 51 948
- US-A- 4 474 861
- Dies, Kupfer und Kupferlegierungen, (1967), p. 810-813, 818, 819;

## Description

### Technical Field:

The present invention relates to laser padding materials and, more particularly, to a laser padding material which contains copper as its major component and which is highly resistant to sliding abrasion and friction.

### Background Art:

Much attention is directed to laser padding (including laser coating and laser cladding), because, in addition to the fact that the laser padding can finely control energy density (the diameter of a laser output beam), not only it can increase the processing speed and minimize the reduction of components in a padding alloy due to a parent or base material (that is, the reduction or the alloying components in their composition ratio resulting from the fact that the components of the base material are melted into the padding alloy and thus the alloy components are reduced in their composition ratio) but it can also apply a padded layer as thin as 0.3 to 1.5 mm only to a necessary part of the base material.

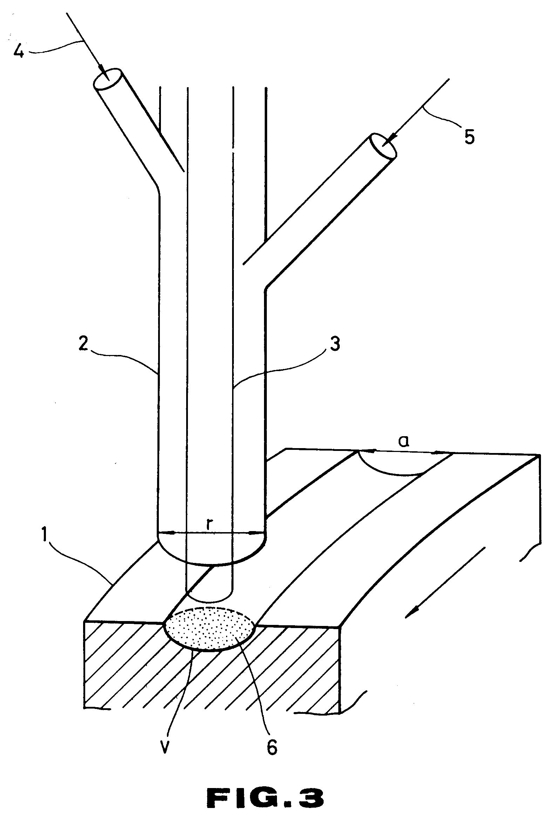

Used as a laser padding apparatus which embodies the aforementioned laser padding, is such a laser padding apparatus as schematically shown in Fig. 3. With the apparatus, a laser beam 3 and such an inert gas as an argon (Ar) gas 4 or the like and padding metal powder 5 are supplied to a groove V provided in a surface of a base material 1 from a supply pipe 2 which is open to the groove V thereabove so that the powder 5 is rapidly melted on the base material 1 and then solidified, thereby forming a padded layer 6 on the base material.

When a laser beam is used, high speed processing can be achieved because the laser beam can provide much thermal energy to a desired local part of an object to be processed, whereby highly accurate padding dimensions can be realized. In addition, since the cooling rate can be high and fine crystalline grain can be obtained, the padded layer can be made high in quality and the processing yield can be also made high.

In this way, the laser padding method has a basic merit that padding can be effected so that the dimensions of the padded part are substantially equal to those of its desired finished product, thus providing a high material yield. And the laser padding method is conventionally used for such cobalt (Co) hardened metal as stellite nickel (Ni) hardened metal, and such iron (Fe) alloy as stainless steel.

Conventional padding copper (Cu) materials include brass (Cu-Zn) alloy, phosphor bronze known as PBC2A, and copper-tin-lead (Cu-Sn-Pb) alloy known as LBC. The disposal of hardfacing Ca-alloy compositions in powder form on a surface of a base metal sbustrate (whereby the melting is accomplished by scanning with a laser beam) is disclosed in US-A-4 474 861, it has been, however, impossible to use these materials in the laser padding method for the following reasons, thus disabling the laser padding using copper alloy.

### (1) Brass (Cu-Zn) alloy

When a laser beam as a high-density energy source is used, the temperature of molten pool of such padding material exceeds a thousand and several hundred degrees and evaporates and thus padding is impossible, because the boilding point of zinc (Zn) is as low as 908°C.

### (2) PBC2A (Cu-Sn) alloy)

This material tends to easily contain gas and thus cause some gas defects, though the material is one of copper alloys which can be used even under a high surface pressure and can be effectively used as sliding material.

### (3) LBC (Cu-Sn-Pb alloy)

The laser padding provides a high-density energy as has been mentioned above, the processing rate is very fast, and the time period of such material necessary for its phase change from the solid state to the molten state after subjected to a laser beam irradiation, is as short as 0.1 to 0.5 second. As a result, the molten material is hardened or set before slag caused by the laser beam irradiation float up to the surface of the molten material, thus causing slag involvement within the padded part.

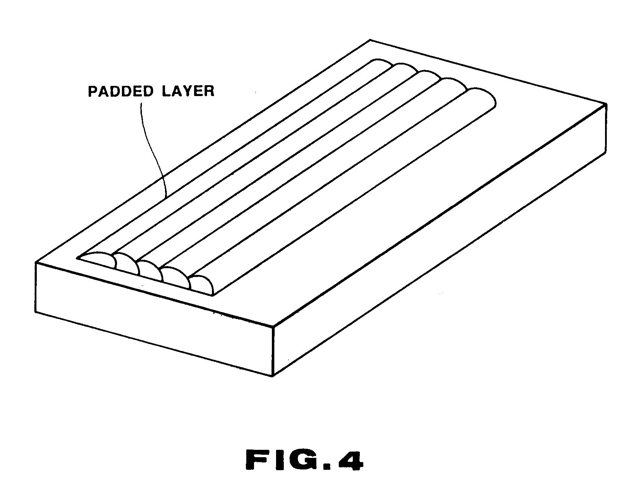

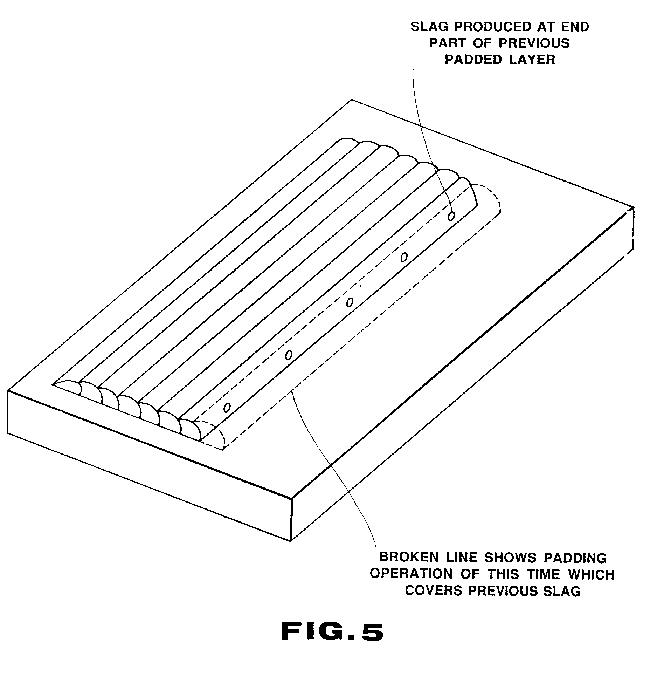

In addition, when it is desired to perform padding over a wide area by the laser padding method, linear padded layers must be overlapped each other as shifted mutually slightly as shown in Fig. 4, which results in that slag formed on the surface of the previous padded layer is involved within the next padded layer during the next padding operation, as shown in Fig. 5.

In this manner, since any copper alloys have not been able to be employed in the laser padding method, the realization of copper laser padding material excellent in its sliding-abrasion resistance characteristic has been desired.

Further, copper-nickel alloys comprising silicon and manganese are known from JP-A-60-77949 and JP-A-59-145 748.

In view of the aforementioned circumstances in the prior art, it is an object of the present invention to provide a laser padding material (based on copper) which is highly resistant to sliding abrasion and friction and which allows a high quality of laser padding.

### Disclosure of Invention:

A laser padding material in accordance with the present invention comprises a laser padding material comprising
1-5 wt% nickel (Ni);
0,1-5 wt% silicon (Si);
at least one deoxidizing element selected from
less than 1 wt% boron (B),
less than 2 wt% phosphorus (P),
less than 3 wt% manganese (Mn), and
less than 1 wt% aluminium (Al), or
less than 1 wt% calcium (Ca);
0.01 to less than 30 wt% of ceramic powder having a hardness of above 2000 HV,
optionally 8-15 wt% of tin (Sn) or lead (Pb);
the balance being copper (Cu) plus impurities.

The invention further provides a laser padding method comprising the steps of:
supplying, onto a metal base material, material powder of the above laser padding material; and irradiating a laser beam on said- material powder in an inert gas atmosphere, and wherein the material powder is melted on said metal base material to form a laser padded layer thereon.

More in detail, the laser padding material of the present invention comprises, as basic components, Cu, Ni and Si, among which Ni and Si are combined into an Ni-Si compound which acts to increase the hardness of the padded alloy. Accordingly, the addition amounts of Ni and Si are determined so that the molar ratio of Ni to Si in the padding material becomes 2 to 1. When the addition amount of Ni in the padding material exceeds 3 weight percent and the partner material is based on iron, a baking phenomenon sometimes occurs between the padded material and the iron-based material during the sliding of the padded material on the iron-based material, in particular, under a high surface pressure. For this reason, Ni₂Si to be contained in the padded material is set to be optimumly 2-3 weight percentage, but another quantity of Ni₂Si may be employed without causing any special troubles so long as Ni content in the Ni₂Si falls within a range of 1 to 5 weight percentage and Si content threin falls within a range of 0.2 to 5 weight percentage.

When laser padding was carried out with use of a material comprising 2-3 weight % of Ni₂Si and the remaining all copper and then the padded alloy was subjected to an aging treatment for an hour at 500°C, the resultant copper alloy was as very high as about H_{WB}.

Elements Si, B, P and Mn combine with oxygen and float up to the surface of the molten copper alloy. In this way, by forcingly forming slag as very light as several tenths of the specific gravity of the copper alloy, such slag can be floated upward due to a difference in specific gravity between the slag and the alloy to be separated, thus preventing the slag involvement within the alloy.

That is, the elements Si, B, P and Mn act as deoxidaton agents. When at least one element selected from the group consisting of less than 1 weight % of B, less than 2 weight % of P and less than 3 weight % of Mn is used in particular, gas defects caused by the deoxidation agent action can be favorably prevented.

Also effective, in addition to the aforementioned deoxidation agents, are aluminum (Al) and calcium (Ca) which are contained in the padding material preferably in a range of less than 1 weight percentage. For example, the alloy powder may comprise Cu, Ni, Si and less than 1 weight % of Al.

Further, when the padding operation is carried out with use of a padding material which contains, fine ceramic particles dispersed therein, the padded alloy obtained can exhibit a more excellent anti-friction characteristic. In this case, practically any ceramic material can be employed as will be explained later, so long as the ceramic material has an HV of above 2,000. However, it is desirable to use such ceramic material that can provide a smallest specific gravity difference with respect to the above alloy material. This is because the presence of such specific gravity difference prevents the uniform dispersion of the ceramic material. Our tests have shown that the addition of 0.01 weight % of ceramic material having a particle size of about several µm can prepare such a padded alloy that can exhibit the highest PV value. The PV value shows a sliding friction characteristic expressed as a product of surface pressure (P)and sliding speed (V).

Ceramic materials acting to increase the above PV value include, for example, Mo₂B₅, MoB, SiC, Si₃N₄ and Al₂0₃; and one or more of these materials may be contained in the padding material at a single or total level of less than of 30 weight %. The determination of the level of less than 30 weight percentage was to avoid the strength of the alloy from being reduced when the ceramic level is set below 30 weight %.

Tin Sn or lead Pb frequently added generally in a sliding copper alloy may be added respectively in 8-15 weight percentage and 8-15 weight percentage in the above materials.

### Brief Description of Drawings:

Fig. 1 is a table showing percentage ratios between components contained in a laser padding material in accordance with an embodiment of the present invention;
Fig. 2 is a graph comparatively showing results of a sliding-friction test for the material of Fig. 1, together with results of the same test for a prior art material;
Fig. 3 is a diagram for explaining a laser beam padding; and
Figs. 4 and 5 are diagrams for explaining padded layers and slag when the laser beam padding is carried out, respectively.

### Best Mode for Carrying Out the Invention:

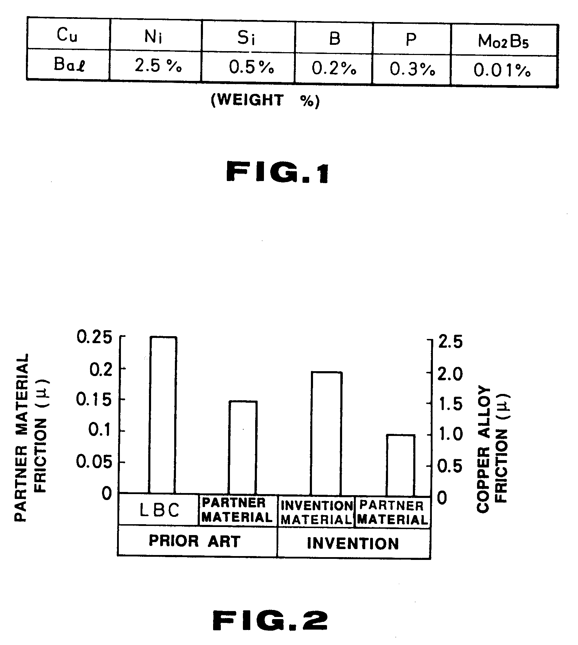

96.49 weight % of copper powder, 2.5 weight % of nickel powder, 0.5 weight % of silicon powder, 0.2 weight % of boron (B) powder, 0.3 weight % of phosphorus (P) powder, and 0.01 weight % of molybdenum boride (Mo₂B₅) powder are mixed as shown in Fig. 1 to prepare mixture powder. The mixture powder is supplied as material powder 4 onto a groove V (to be padded) made in the surface of an iron plate 1 from a supply pipe of such a padding apparatus as shown in Fig. 3, while an argon gas as a gas 5 is supplied onto the groove V at a rate of 0.5 to 10 ℓ/min., and at the same time, the iron plate 1 is driven along the groove V made therein at a speed of 1 m/min., as a result of which a padded layer 6 is formed within the padding groove V.

In this case, it is preferable that a diameter r of the supply pipe satisfies a relation of 2a < r < 3a, and it is also preferable that a distance between the tip end of the pipe and the metal base material 1 is set to be below 5a, where a denotes the width of the padding groove.

When the diameter of the supply pipe is smaller than 2a the gas sealing becomes insufficient, whereas, when the pipe diameter is larger than 3a a disturbance takes place in the gas flow also with sufficient sealing effect. In addition, under such conditions, the gas consumption is increased. When the distance between the tip end of the supply pipe and the surface of the metal base material exceeds 5a, a disturbance occurs in the argon gas and the oxidation preventing effect is lost due to air involvement.

The padded layer thus formed was subjected to a sliding friction test, results of which are shown in Fig. 2. As shown in Fig. 2, the present invention layer and the partner material could both be reduced about 20% in friction amount when compared with the prior art, and thus the invention could exhibit a highly excellent sliding characteristic. This padded copper alloy layer is effective, in particular, when the partner material is iron, with high practical utility.

Although the respective elements have been mixed respectively as a single substance and then added to the material powder in the foregoing example, it goes without saying that the elements may be added respectively in the form of a compound, and that the material powder may be once melted to form an alloy and then the alloy may be changed again to a powder form.

For example, even when first alloy powder comprising 70.5 weight % of Cu, 20 weight % of Ni, 4.5 weight % of Si, 3 weight % of P and 2 weight % of B is mixed with second ally powder comprising 90 weight % of Cu, 10 weight % of Sn and 0.02 weight % of P at a ratio of 85 to 15 and the mixture powder is used as the padding material, a padded layer having an excellent characteristic can be obtained.

### Industrial Applicability:

In this way, when the laser padding material in accordance with the present invention is used, such laser padding that has been conventionally considered practically impossible to be carried out with respect to copper materials, can become possible. As a result, there can beobtained easily and at a high speed a padded layer which is excellent in anti-friction characterisitic and high in dimensional accuracy, and which is highly effectively be applied to such a sliding part as a hydraulic part.

## Claims

1. A laser padding material comprising
1-5 wt% nickel (Ni);
0,1-5 wt% silicon (Si);
at least one deoxidizing element selected from
less than 1 wt% boron (B),
less than 2 wt% phosphorus (P),
less than 3 wt% manganese (Mn), and
less than 1 wt% aluminium (Al), or
less than 1 wt% calcium (Ca);
0.01 to less than 30 wt% of ceramic powder having a hardness of above 2000 HV;
optionally 8-15 wt% of tin (Sn) or lead (Pb);
the balance being copper (Cu) plus impurities.

2. A laser padding material as set forth in claim 1, characterized in that the deoxidizing agent is selected from less than 1 wt% of boron (B), less than 2 wt% of phosphorus (P) and less than 3 wt% of manganese (Mn).

3. A laser padding material as set forth in claim 1, characterized in that the deoxidizing agent is selected from less than 1 wt% of aluminium (Al) or less than 1 wt% of calcium (Ca).

4. A laser padding matrial according to any one of claims 1 to 3, wherein said contained elements are provided respectively in the form of powder of a substance consisting of single one or ones of the elements.

5. A laser padding material according to any one of claims 1 to 3, wherein said contained elements are provided in the form of copper alloy powder.

6. A laser padding material according to any one of claims 1 to 5, wherein the ceramic powder is alumina ceramic powder.

7. A laser padding material according to any one of claims 1 to 3, wherein said nickel and silicon are provided to be 2 to 1 in molar ratio.

8. A laser padding method comprising the steps of:
supplying, onto a metal base material, material powder of a laser padding material according to any one of claims 1 to 7; and
irradiating a laser beam on said material powder in an inert gas atmosphere,
and wherein the material powder is melted on said metal base material to form a laser padded layer thereon.

9. A laser padding method as set forth in claim 8, wherein said supplying step is carried out by supplying said contained elements in the form of powder of a substance consisting of single one or ones of the elements.

10. A laser padding method as set forth in claim 8, wherein said supplying step is carried out by supplying copper alloy powder including said contained elements.

## Patentansprüche

1. Laser-Aufschweißmaterial, umfassend
1 bis 5 Gew.-% Nickel (Ni);
0,1 bis 5 Gew.-% Silicium (Si);
wenigstens ein desoxidierendes Element, ausgewählt aus
weniger als 1 Gew.-% Bor (B),
weniger als 2 Gew.-% Phosphor (P),
weniger als 3 Gew.-% Mangan (Mn) und
weniger als 1 Gew.-% Aluminium (Al) oder
weniger als 1 Gew.-% Calcium (Ca);
0,01 bis weniger als 30 Gew.-% Keramik-Pulver mit einer Härte oberhalb von 2000 HVi;
gegebenenfalls 8 bis 15 Gew.-% Zinn (Sn) oder Blei (Pb);
wobei der Rest aus Kupfer (Cu) und Verunreinigungen besteht.

2. Laser-Aufschweißmaterial nach Anspruch 1, dadurch gekennzeichnet, daß das desoxidierende Mittel aus weniger als 1 Gew.-% Bor (B), Weniger als 2 Gew.-% Phosphor (P) und weniger als 3 Gew.-% Mangan (Mn) ausgewählt ist.

3. Laser-Aufschweißmaterial nach Anspruch 1, dadurch gekennzeichnet, daß das desoxidierende Mittel aus weniger als 1 Gew.-% Aluminium (Al) oder weniger als 1 Gew.-% Calcium (Ca) ausgewählt ist.

4. Laser-Aufschweißmaterial nach irgendeinem der Ansprüche 1 bis 3, worin die darin enthaltenen Elemente jeweils in Form von Pulver einer Substanz bereitgestellt werden, die aus einem einzelnen oder mehreren der Elemente besteht.

5. Laser-Aufschweißmaterial nach irgendeinem der Ansprüche 1 bis 3, worin die darin enthaltenen Elemente in Form von Kupferlegierungs-Pulver bereitgestellt werden.

6. Laser-Aufschweißmaterial nach irgendeinem der Ansprüche 1 bis 5, worin das Keramik-Pulver Aluminiumoxid-Keramik-Pulver ist.

7. Laser-Aufschweißmaterial nach irgendeinem der Ansprüche 1 bis 3, worin das Nickel und das Silicium so bereitgestellt werden, daß sie in einem Stoffmengen-Verhältnis ("Mol-Verhältnis") 2 zu 1 vorliegen.

8. Laser-Aufschweißverfahren, umfassend die Schritte
des Zuführens eines Material-Pulvers aus einem Laser-Aufschweißmaterial nach irgendeinem der Ansprüche 1 bis 7 auf ein Metall-Grundmaterial,
des Einstrahlenlassens eines Laser-Strahls auf das Material-Pulver in einer Inertgas-Atmosphäre, und
worin das Material-Pulver auf dem Metall-Grundmaterial geschmolzen wird, wodurch eine laseraufgeschweißte Schicht auf diesem gebildet wird.

9. Laser-Aufschweißverfahren nach Anspruch 8, worin der Schritt des Zuführens in der Weise durchgeführt wird, daß die enthaltenen Elemente in Form von Pulver einer Substanz zugeführt werden, die aus einem einzelnen oder mehreren der Elemente besteht.

10. Laser-Aufschweißverfahren nach Anspruch 8, worin der Schritt des Zuführens in der Weise durchgeführt wird, daß Kupferlegierungs-Pulver zugeführt wird, das die enthaltenen Elemente umfaßt.

## Revendications

1. Matière de padding pour laser, comprenant
1 à 5 % en poids de nickel (Ni);
0,1 à 5 % en poids de silicium (Si);
au moins un élément désoxydant, choisi parmi
moins de 1 % en poids de bore (B),
moins de 2 % en poids de phosphore (P),
moins de 3 % en poids de manganèse (Mn), et
moins de 1 % en poids d'aluminium (Al), ou
moins de 1 % en poids de calcium (Ca);
0,01 à moins de 10 % en poids d'une poudre de matière céramique ayant une dureté supérieure à 2 000 HV,
éventuellement 8 à 15% en poids d'étain (Sn) ou de plomb (Pb),
le reste étant du cuivre (Cu) plus des impuretés.

2. Matière de padding pour laser, selon la revendication 1, caractérisée en ce que l'agent de désoxydation est choisi parmi moins de 1 % en poids de bore (B), moins de 2 % en poids de phosphore (P) et moins de 3 % en poids de manganèse (Mn).

3. Matière de padding pour laser, selon la revendication 1, caractérisée en ce que l'agent de désoxydation est choisi parmi moins de 1 % en poids d'aluminium (Al) ou moins de 1 % en poids de calcium (Ca).

4. Matière de padding pour laser selon l'une quelconque des revendications 1 à 3, dans laquelle lesdits éléments contenus sont fournis, respectivement sous forme de poudre d'une substance contenant un seul élément ou contenant certains des éléments.

5. Matière de padding pour laser, selon l'une quelconque des revendications 1 à 3, dans laquelle lesdits éléments contenus sont fournis sous forme d'une poudre d'alliage de cuivre.

6. Matière de padding pour laser selon l'une quelconque des revendications 1 à 5, dans laquelle la poudre de matière céramique est une poudre céramique d'alumine.

7. Matière de padding pour laser selon l'une quelconque des revendications 1 à 3, dans laquelle le nickel et le silicium sont fournis de manière à présenter un rapport molaire de 2 à 1.

8. Procédé de formation de padding pour laser, comprenant les étapes consistant à :
- fournir, sur une matière métallique de base, une poudre d'une matière de padding pour laser selon l'une quelconque des revendications 1 à 7, et,
- soumettre ladite poudre de matière à une irradiation par un faisceau laser en atmosphère de gaz inerte,
- et dans lequel on fait fondre ladite matière en poudre sur la matière métallique de base pour y former une couche obtenue par laser.

9. Procédé de formation de padding pour laser, tel qu'indiqué à la revendication 8, dans lequel ladite étape de fourniture est effectuée en fournissant lesdits éléments contenus sous la forme de poudre d'une susbtance consistant en un seul des éléments ou en certains des éléments.

10. Procédé de formation de padding pour laser, tel qu'indiqué à la revendication 8, dans lequel ladite étape de fourniture est réalisée en fournissant une poudre d'alliage de cuivre contenant lesdits élements.
